(19) Europäisches Patentamt
European Patent Office
Office européen des brevets

(11) **EP 3 112 801 B1**

(12) **EUROPEAN PATENT SPECIFICATION**

(45) Date of publication and mention
of the grant of the patent:
**10.01.2018 Bulletin 2018/02**

(51) Int Cl.:
***G01B 15/02*** *(2006.01)*

(21) Application number: **14830489.2**

(86) International application number:
**PCT/JP2014/002677**

(22) Date of filing: **22.05.2014**

(87) International publication number:
**WO 2015/125178 (27.08.2015 Gazette 2015/34)**

(54) **X-RAY THICKNESS GAUGE**

RÖNTGENSTRAHL-DICKENMESSVORRICHTUNG

JAUGE D'ÉPAISSEUR À RAYONS X

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.02.2014 JP 2014032740**

(43) Date of publication of application:
**04.01.2017 Bulletin 2017/01**

(73) Proprietor: **Kabushiki Kaisha Toshiba
Minato-ku
Tokyo 105-8001 (JP)**

(72) Inventor: **KAGAWA, Takeshi
105-8001 Tokyo (JP)**

(74) Representative: **Hoffmann Eitle
Patent- und Rechtsanwälte PartmbB
Arabellastraße 30
81925 München (DE)**

(56) References cited:
WO-A1-2009/121916      JP-A- S6 079 207
JP-A- H04 198 708      JP-A- 2000 292 140
JP-A- 2004 301 793      JP-A- 2010 236 954
JP-A- 2011 107 147      JP-A- 2011 242 254
JP-U- H0 555 013      US-A1- 2011 026 672

**Description**

[CROSS-REFERENCE TO RELATED APPLICATION]

This application is based upon and claims the benefit of priority from the prior Japanese Patent Application No.2014-032740, filed on February 24, 2014, the entire contents of which are incorporated herein by reference.

[FIELD]

The present invention relates to an X-ray thickness gauge, and relates to a correction method of a thickness measurement error due to the drift of an exposure dose of X-ray.

[BACKGROUND]

There is a thickness gauge to measure a thickness of a measured object, using that an attenuation amount of an exposure dose of the radiation ray transmitted through each of various measured objects is a function of a thickness of the measured object.
For the plate thickness measurement of iron, aluminum, or the like during rolling, an X-ray thickness gauge using X-ray as radiation ray has been widely used, because the dose thereof is much and high speed measurement can be performed.
In this X-ray tube to generate X-ray, thermo electrons emitted from a cathode (filament) are accelerated in the direction of an anode (target) by a high voltage applied between the both electrodes, and collide with the surface of the target of the anode, to cause X-ray to be generated.
The generation efficiency of an X-ray tube is extremely low, and a part that is about 1%, of the kinetic energy of thermo electrons due to the collision is converted into X-ray, but most of it, that is 99%, is converted into heat. The target of the anode of the X-ray tube is heated by this heat, and becomes high in temperature.
Usually, the circumference of the X-ray tube is always cooled by insulating oil, and the whole inside of the X-ray generator containing the X-ray tube is always cooled by cooling medium such as cooling water, so that the target is not overheated.
By the way, when the cooling medium of the X-ray generator changes in temperature, the temperature at the periphery of the target changes, and the position and angle of the target of the anode deviate, to cause the exposure dose of the X-ray to be changed.
In a thickness gauge to obtain a plate thickness of a measured object from an attenuation amount of X-ray, since the change of the exposure dose of the X-ray is a problem which is directly connected to a thickness measurement error, conventionally, the temperature and flow rate of the cooling medium supplied to the X-ray tube are controlled by a cooling medium circulation device such as a chiller, so that the temperature thereof becomes within a constant temperature range.
By the way, as a cooler for an X-ray tube, there is a cooler for an X-ray tube which is provided with primary cooling medium and secondary cooling medium (Refer to Patent Document 1, for example.).
In addition, in X-ray thickness gauges, there is an X-ray thickness gauge which can calibrate a thickness, if a thickness measurement range is within a limited range, even if a measured object is during measurement (Refer to Patent Document 2, for example.).

[Prior Art Document]

[Patent Document]

[Patent Document 1] Japanese Patent Application Publication No. Hei 5-82285
[Patent Document 2] Japanese Patent Publication No. 1610330

JP H04 198708 A discloses an X-ray thickness gauge comprising an X-ray generator, a cooling unit to cool the X-ray tube with cooling medium, and a power source unit. An exposure dose irradiated from the X-ray generator transmits through a measured object and is detected. A calibration device is provided with a thickness reference piece to be provided in the route of the irradiated X-ray. A calculation unit obtains an attenuation amount of the X-ray by the measured object from an output of the detector, and obtains a thickness of the measured object with reference to a previously created calibration table that correlates a thickness of the thickness reference piece and the transmitted detection dose.

[Summary of the Invention]

[Problems to be Solved by the Invention]

In a conventional X-ray thickness gauge, a thickness reference piece has been inserted in a radiation route of X-ray, so that the measurement accuracy does not change even if an ambient temperature at the installation place of the device changes, and thickness calibration has been performed at a high frequency, to thereby assure the measurement accuracy.

Further, in the case of an X-ray thickness gauge, since a main cause of a temperature drift affecting measurement accuracy is the change of an exposure dose of X-ray due to the change of an ambient temperature of an X-ray tube, as described above, generally, a circulation device (chiller) of cooling water that is cooling medium is provided, and is controlled so that the ambient temperature of the X-ray tube becomes constant, to cause the exposure dose not to be changed. But, in this case, there is a problem that the system becomes expensive and complicated.

In the case of the thickness calibration method disclosed in Cited Reference 2, in a whole calibration over the whole thickness measurement range, calibration is performed in the state without a measured object, that is, in the state in which a measured object does not exist during the measurement, in the X-ray route space where X-ray is irradiated.

However, since in a thickness measurement in the case of a rolling line of a steel plate or the like, the measurement is performed continuously for a long time, in the case of performing thickness calibration, since it is necessary that the device is once retracted from a measurement position to a calibratable calibration position, there is a problem that the thickness measurement cannot be performed during that time.

In addition, in a range calibration in which a thickness measurement range is limited to a small range, it is stated that the calibration can be performed during the measurement, but there is a problem that a calibration device becomes complicated.

In order to avoid problems like these, there is a method in which a plurality of X-ray thickness gauges are installed, and which uses the gauge alternately in the redundant configuration, but also in the case of this configuration, there is a problem that the system becomes complicated.

The present invention makes it an object to provide an X-ray thickness gauge which can correct a thickness measurement error due to a drift of an exposed dose of X-ray of the X-ray thickness gauge after thickness calibration, with a simple configuration, even during the measurement.

[Means for Solving the Problem]

In order to achieve the above-described object, an X-ray thickness gauge according to claim 1 is provided.

[BRIEF DESCRIPTION OF THE DRAWINGS]

[Fig. 1] A block configuration diagram of an X-ray thickness gauge of an embodiment.
[Fig. 2] An configuration diagram for explaining an outline of an X-ray generator and an X-ray control power source of the embodiment.

[DETAILED DESCRIPTION]

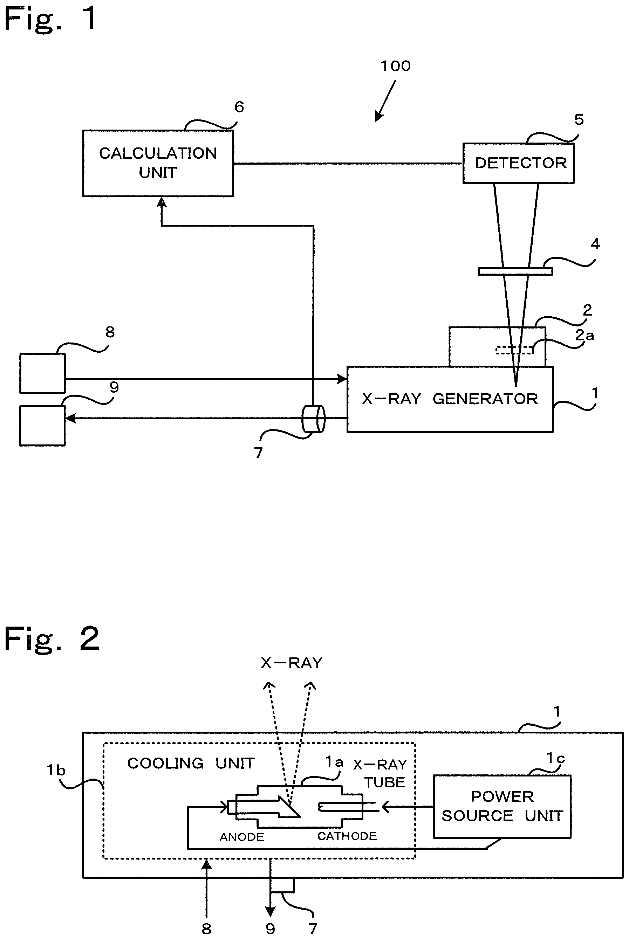

Hereinafter, an embodiment will be described with reference to Fig. 1, Fig. 2. To begin with, an X-ray thickness gauge 100 of the present embodiment will be described.

In Fig. 1, the X-ray thickness gauge 100 is provided with an X-ray generator 1 which is provided with an X-ray tube 1a, a cooling unit 1b to cool the X-ray tube 1a with cooling medium, a power source unit 1c to stabilize and supply a high voltage power source to be applied to the X-ray tube 1a and a filament current, and generates X-ray, a detector 5 to detect a detection exposure dose after an exposure dose irradiated from the X-ray generator 1 has transmitted through a measured object 4, and a calibration device 2 provided with a thickness reference piece 2a to be provided in the route of the irradiated X-ray.

Further, the X-ray thickness gauge 100 is provided with a calculation unit 6 which obtains an attenuation amount of the X-ray by the measured object 4 from an output of the detector 5, and obtain a thickness of the measured object with reference to a previously created calibration table that correlates a thickness of the thickness reference piece 2a and the detection exposure dose.

Usually, in the case of measuring a plate thickness of a steel plate or the like, the X-ray generator 1 and the detector 5 are mounted on a C-shaped frame not shown which fixes the measured object 4 so that the measured object 4 is sandwiched in the vertical direction there between.

In addition, the calibration device 2 is provided between the X-ray generator 1 and the measured object 4, and inserts the thickness calibration piece 2a in the route of the X-ray, in the state that the measured object 4 does not exist in the route of the X-ray, in response to a calibration command from the calculation unit 6.

Next, the detailed configuration of the respective units will be described. As the X-ray tube 1a, one from which a proper exposure dose can be obtained, in accordance with material of the measured object 4 and a thickness measurement range of the measured object 4, is arbitrarily selected.

And, the cooling unit 1b flows cooling medium that is insulating oil and cooling water, based on a cooling structure previously determined by the X-ray tube 1a, to thereby cool the circumference of the X-ray tube 1a so that its temperature becomes not more than a prescribed temperature range.

The cooling unit 1b circulates the cooling medium supplied from a cooling medium supply unit 8 to supply cooling medium within a piping provided around the X-ray tube 1a, and discharges the cooling medium to a cooling medium discharge unit 9. The cooling unit 1b flows this cooling medium around the X-ray tube 1a, to cool the circumference of the X-ray tube 1a to a uniform temperature.

Further, a temperature sensor 7 to measure a temperature of the circulated cooling medium is provided in the vicinity of a discharge position of the cooling unit 1b, and the temperature of the discharged cooling medium is detected by the temperature sensor 7 and is sent to the calculation unit 6.

In addition, when the cooling medium is water, the cooling medium supply unit 8 and the cooling medium discharge unit 9 may be made to be a circulation type cooling device with an integrated configuration thereof. However, in the case of the cooling water by a usual piping without using a chiller or the like, since the temperature thereof usually varies by about 10°C in the morning and in the evening, in the environment inside a production factory where the device is to be installed, any temperature correction is required.

Next, an operation of the X-ray thickness gauge 100 configured like this will be described. To begin with, calibration using the thickness reference piece 2a is performed, based on the conventional method as shown in Patent Document 2, at a prescribed calibration time interval, for every 8-hour pitch, for example, to previously create a calibration table (calibration curve) that correlates detection exposure doses and a plurality of reference thicknesses.

And, a temperature Tr of the cooling medium at this calibration time is sent from the temperature sensor 7 to the calculation unit 6, which stores the detection exposure dose and the temperature Tr at the time of the calibration by correlating them.

Next, the measurement of the measured object 4 is performed. A temperature during the measurement at this time is Tm.

Then, when a thickness corresponding to the detection exposure dose is obtained, using the calibration curve in the state of the temperature Tr at the calibration time, a measurement error is generated, which corresponds to a variation of the detection exposure dose based on the difference between the temperature Tm at the measurement time and the temperature Tr.

However, since a detection exposure dose Im at the time of the temperature Tm, and a detection exposure dose Ir at the time of the temperature Tr are correlated, this correlation function F(d) has been obtained in advance by changing the temperature of the cooling medium. Here, the correlation function F(d) is a function depending on a thickness of the measured object.

The relation between this detection exposure dose and a temperature of the cooling water is shown by the following expression.

$$Im = Ir \times F1(d) \times (Tm - Tr) \quad \cdots \quad (1)$$

or

$$Im = Ir \times F2(d) \times ((Tm - Tr) / Tr) \quad \cdots \quad (2)$$

Accordingly, this corrected detection exposure dose Im is obtained by the above-described expression (1) or (2), and when a thickness is obtained with reference to the calibration table at the time of the temperature Tr corresponding to the obtained Im, it is possible to obtain a thickness in which a measurement error corresponding to the temperature difference has been corrected.

That is, if the correlation function F(d) by the temperature change of the cooling medium has been obtained in advance, it is possible to correct the change of the detection exposure dose due to the temperature change of the cooling medium, even during the measurement.

As described above, according to the present embodiment, since the calculation unit 6 is previously provided with the temperature correction table, or the temperature correction expression which obtains the detection exposure dose corresponding to the temperature difference (Tm - Tr) between the temperature Tr of the cooling medium at the time of calibration when the calibration table was created, and the temperature Tm of the cooling medium during measurement of the thickness of the measured object 4, obtains the difference to the temperature at the calibration time, from the temperature of the cooling medium during measurement, and obtains (corrects) the detection exposure dose with reference to the temperature correction table or the temperature correction expression, and further obtains the thickness with reference to the calibration table, it is possible to obtain the thickness of the above-described measured object even during the measurement.

Accordingly, it is possible to provide an X-ray thickness gauge which can correct a measurement error due to a drift of an exposure dose of the X-ray thickness gauge after thickness calibration, with a simple configuration, even when the X-ray thickness gauge is during measurement.

While certain embodiments have been described, these embodiments have been presented by way of example only, and are not intended to limit the scope of the inventions. Indeed, the embodiments described herein may be embodied in a variety of other forms; furthermore, various omissions, substitutions and changes in the form of the embodiments described herein may be made without departing from the scope of the invention as defined by the appended claims.

**Claims**

1.  An X-ray thickness gauge (100) comprising:

    an X-ray generator (1) which is provided with an X-ray tube (1a) a cooling unit (1b) to cool the X-ray tube with cooling medium, a power source unit (1c) to stabilize and supply a high voltage power source to be applied to the relevant X-ray tube and a filament current, and which is provided to generate X-ray;
    a detector (5) to detect a detection exposure dose after an exposure dose irradiated from the X-ray generator has transmitted through a measured object (4);
    a calibration device (2) provided with a thickness reference piece (2a) to be provided in the route of the irradiated X-ray; and
    a calculation unit (6) which is arranged to obtain an attenuation amount of the X-ray by the measured object (4) from an output of the detector, and to obtain a thickness of the measured object with reference to a calibration table that correlates a thickness of the thickness reference piece and the transmitted detection dose ;
    the X-ray thickness gauge **characterized by** further comprising:

    a temperature sensor (7) to measure a temperature of the cooling medium;
    wherein the calculation unit is provided with a temperature correction table or a temperature correction expression which obtains the detection exposure dose corresponding to a temperature difference between a temperature (Tr) of the cooling medium measured using the thickness reference piece at the time of calibration, and a temperature (Tm) of the cooling medium during measurement to measure the measured object;
    the calculation unit being arranged to obtain the difference (Tm-Tr) between the temperature of the cooling medium during the measurement and the temperature at the time of the calibration, and to obtain the corresponding detection exposure dose with reference to the temperature correction table or the temperature correction expression; and further to obtain the thickness with reference to the calibration table; and thereby correction of a thickness measurement error is enabled even during the measurement.

2.  The X-ray thickness gauge as recited in Claim 1, wherein the temperature sensor is provided at a position where the cooling medium is discharged from the cooling unit.

**Patentansprüche**

1.  Röntgen-Dickenmessgerät (100), umfassend:

    einen Röntgengenerator (1), der mit einer Röntgenröhre (1a), einer Kühleinheit (1b) zum Kühlen der Röntgenröhre mit einem Kühlmedium, einer Energiequelleneinheit (1c) zum Stabilisieren und Zuführen einer Hochspannungs-Energiequelle, die an die relevante Röntgenröhre angelegt werden soll, und einem Heizstrom, bereitgestellt ist und der bereitgestellt ist, um Röntgenstrahlen zu erzeugen;

einen Detektor (5) zum Detektieren einer Detektions-Expositionsdosis, nachdem eine von dem Röntgengenerator abgestrahlte Expositionsdosis durch ein gemessenes Objekt (4) gesendet wurde;

eine Kalibriervorrichtung (2), die mit einem Dicken-Referenzstück (2a) bereitgestellt ist, das im Pfad der abgestrahlten Röntgenstrahlen bereitgestellt werden soll; und

eine Berechnungseinheit (6), die angeordnet ist, einen Dämpfungsbetrag der Röntgenstrahlen durch das gemessene Objekt (4) aus einer Ausgabe des Detektors zu erhalten und eine Dicke des gemessenen Objekts hinsichtlich einer Kalibriertabelle zu erhalten, die eine Dicke des Dicken-Referenzstücks mit der gesendeten Detektionsdosis korreliert;

wobei das Röntgen-Dickenmessgerät **dadurch gekennzeichnet ist, dass** es weiter umfasst:

einen Temperatursensor (7) zum Messen einer Temperatur des Kühlmediums;

wobei die Berechnungseinheit mit einer Temperatur-Korrekturtabelle oder einem Temperatur-Korrekturausdruck bereitgestellt ist, der die Detektions-Expositionsdosis erhält, die einer Temperaturdifferenz zwischen einer Temperatur (Tr) des Kühlmediums, gemessen unter Verwendung des Dicken-Referenzstücks zur Zeit der Kalibrierung, und einer Temperatur (Tm) des Kühlmediums während der Messung zum Messen des gemessenen Objekts entspricht;

wobei die Berechnungseinheit angeordnet ist, die Differenz (Tm-Tr) zwischen der Temperatur des Kühlmediums während der Messung und der Temperatur zur Zeit der Kalibrierung zu erhalten und die korrespondierende Detektions-Expositionsdosis hinsichtlich der Temperatur-Korrekturtabelle oder des Temperatur-Korrekturausdrucks zu erhalten; und

weiter, die Dicke hinsichtlich der Kalibriertabelle zu erhalten; und dadurch eine Korrektur eines Dicke-Messfehlers sogar während der Messung ermöglicht wird.

2. Röntgen-Dickenmessgerät nach Anspruch 1, wobei der Temperatursensor an einer Position bereitgestellt ist, an der das Kühlmedium aus der Kühleinheit ausgelassen wird.

**Revendications**

1. Jauge d'épaisseur à rayons X (100) comprenant :

un générateur de rayons X (1) qui est pourvu d'un tube à rayons X (1a), d'une unité de refroidissement (1b) pour refroidir le tube à rayons X avec un milieu de refroidissement, d'une unité d'alimentation en énergie (1c) pour stabiliser et fournir une source d'alimentation de haute tension à appliquer au tube à rayons X approprié et un courant de filament, et qui est fourni pour générer des rayons X ;

un détecteur (5) pour détecter une dose d'exposition de détection après qu'une dose d'exposition irradiée à partir du générateur de rayons X est transmise à travers un objet mesuré (4) ;

un dispositif d'étalonnage (2) pourvu d'une pièce de référence d'épaisseur (2a) à disposer sur le parcours des rayons X irradiés; et

une unité de calcul (6) qui est conçue pour obtenir une quantité d'atténuation des rayons X par l'objet mesuré (4) à partir d'une sortie du détecteur, et pour obtenir une épaisseur de l'objet mesuré en se référant à un tableau d'étalonnage qui met en corrélation une épaisseur de la pièce de référence d'épaisseur et la dose de détection transmise ;

la jauge d'épaisseur à rayons X **caractérisée en ce qu'**elle comprend en outre :

un capteur de température (7) pour mesurer une température du milieu de refroidissement ;

dans laquelle l'unité de calcul est pourvue d'un tableau de correction de température ou d'une expression de correction de température qui obtient la dose d'exposition de détection correspondant à une différence de température entre une température (Tr) du milieu de refroidissement mesurée en utilisant la pièce de référence d'épaisseur au moment de l'étalonnage, et une température (Tm) du milieu de refroidissement pendant la mesure pour mesurer l'objet mesuré;

l'unité de calcul étant conçue pour obtenir la différence (Tm-Tr) entre la température du milieu de refroidissement pendant la mesure et la température au moment de l'étalonnage, et pour obtenir la dose d'exposition de détection correspondante en se référant au tableau de correction de température ou à l'expression de correction de température ; et

en outre pour obtenir l'épaisseur en se référant au tableau d'étalonnage; et ainsi la correction d'une erreur de mesure d'épaisseur est possible même pendant la mesure.

2. Jauge d'épaisseur à rayons X selon la revendication 1, dans laquelle le capteur de température est fourni à une position où le milieu de refroidissement est évacué à partir de l'unité de refroidissement.

# Fig. 1

# Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014032740 A
- JP HEI582285 B
- JP 1610330 A
- JP H04198708 A